# EUROPEAN PATENT APPLICATION

(11) **EP 2 108 810 A2**
(43) Date of publication of application: **14.10.2009**
(21) Application number: 09156698.4
(22) Date of filing: 30.03.2009
(51) Int. Cl.: F02M 61/16, F02M 61/18

(54) **Fuel Injection Tip**

(30) Priority: 10.04.2008 US 82333
(71) Applicant: Delphi Technologies, Inc., Troy, Michigan 48007 (US)
(72) Inventor: Das, Sudhakar, Rochester, NY 14618 (US)
(74) Representative: Denton, Michael John

(57) **Abstract**

An injection tip of a direct-injection injector includes an injection valve having a valve seat and a valve ball, and tangential inflow holes feeding fuel into a flow area between the ball and the seat. The fuel enters the flow area tangentially thereby causing a swirling motion of the fuel in the flow area. A symmetric velocity profile is created and the flow variations in the flow area are reduced compared to the prior art. Furthermore, the impact force of the inflowing fuel stream on the surface of the ball is reduced compared to the prior art, since in accordance with the invention the fuel stream acts tangentially on the surface of ball. The mass flow rate through the injection valve can be increased by increasing the size of the tangential inflow holes and/or the size of director holes in fluid communication with the flow area.

## Description

### TECHNICAL FIELD

The present invention relates to fuel injection systems of internal combustion engines for direct injection of fuel; more particularly, to fuel injectors for gasoline direct injection; and most particularly, to an improved injection tip and a method for reducing flow variations and impact force in the flow area between the ball and the seat of an injection valve.

### BACKGROUND OF THE INVENTION

Fuel injected internal combustion engines are well known. Fuel injection arrangements may be divided generally into multi-port fuel injection (MPFI), wherein fuel is injected into a runner of an air intake manifold ahead of a cylinder intake valve, and gasoline direct injection (GDI), wherein fuel is injected directly into the combustion chamber of an engine cylinder, typically during or at the end of the compression stroke of the piston. GDI is designed to allow greater control and precision of the fuel charge to the combustion chamber, resulting in better fuel economy and lower emissions. This is accomplished by enabling combustion of an ultra-lean mixture under many operating conditions. GDI is also designed to allow higher compression ratios, delivering higher performance with lower fuel consumption compared to other fuel injection systems.

In direct-injected engines, the injection tip of the fuel injector extends into the combustion chamber of the cylinder and includes director holes for dispersing and directing fuel injected from the injection valve. A typical fuel injection valve includes a beveled circular seat and a reciprocably-actuated ball that seals against the seat in a circular sealing line. Injectors of gasoline direct injection engines provide potential for emission reduction as well as improvement in fuel economy and are, therefore, envisaged as next generation of fuel metering devices. As is well known in the automotive arts, the configuration and positioning of the director holes with respect to the injection valve ball and valve seat are crucial elements in the most fuel efficient distribution of fuel into the combustion chamber. Furthermore, the injector fuel flow path is important to achieve good performance of GDI injectors. Location and orientation of inflow holes that supply fuel to the valve area, large clearance between valve ball and the guide bore, as well as size, location, and orientation of the director holes are important to achieve adequate performance in fuel spray quality and targeting from the injector.

In a prior art basic design of a fuel injector tip, four inflow holes are used to feed fuel in the ball and seat area. These inflow holes are perpendicular to the ball surface. A known problem in prior art fuel injectors is that the ball is typically moved from the center to negotiate the guide bore when the injector is energized and the flow region around the ball becomes asymmetric. This results in flow variations downstream at the inlet side of the director holes. An asymmetric velocity profile at the inlet side of director holes is created due to the offset of the ball. This may result in spray skewness. The relative position of director flow holes with respect to the inflow holes is also important as the director holes away from the flow holes may stave resulting in flow skewness. A simple method to control this flow variation is to have very tight tolerances between the ball and the guide bore that limit the ball movement. However, very tight tolerances add cost to the engineering process, increase the risk of the ball getting stuck in the guide bore, and may also result in premature wear in the ball guide area.

Still further, the fuel flow stream emanating from flow holes directly impinges on the ball surface since the inflow holes are positioned perpendicular to the ball surface, which may cause erosion of carbide particles from the ball surface. Once the loose carbide particles are taken away by this erosion process, they may act as abrasive particles helping fast removal of material from the ball and seat interface. The ball surface quality may be significantly reduced due to the wear out process and may finally result in fuel leakage through the sealing area between the valve seat and the ball. The high wear in the seat area may be aggravated with the use of corrosive fuel such as ethanol blended fuel, for example E10, E22, and E85.

What is needed in the art is a fuel injector for direct-injection that provides improved performance in fuel spray quality and targeting from the injector.

It is a principal object of the present invention to provide reduced flow variations and impact force of the fuel in the ball and seat area of a direct-injection injector valve.

### SUMMARY OF THE INVENTION

Briefly described, a fuel injector tip for a direct-injection fuel system in accordance with the invention includes tangential inflow holes that are used to feed fuel in the ball and seat area of a fuel injection valve. By changing the position of the inflow holes from being perpendicular to the ball surface in the known prior art to being tangential to the ball surface, the fuel flow enters the flow area between the ball and the seat tangentially causing a swirling fluid motion that reduces the flow variations at the inlet side of the director holes and enabling a desirable larger clearance between the ball and the guide bore of the ball compared to prior art injector valves. The swirling motion of the fuel further assists in reducing the effect of a large velocity that is observed in the prior art due to the asymmetric nature of the flow area.

Since the fuel jet from the inflow holes in accordance with the invention is acting tangentially on the ball surface, the impact force on the ball surface is reduced compared to prior art perpendicular inflow holes. This may lower the erosion process at the ball and seat interface.

While tangential inflow holes in accordance with the invention reduce the flow variations, the mass flow rates are also decreased compared to the prior art perpendicular inflow holes. The reduction of mass flow rate can be compensated using larger inflow holes and/or larger director holes in accordance with embodiments of the invention.

### BRIEF DESCRIPTION OF THE DRAWINGS

The present invention will now be described, by way of example, with reference to the accompanying drawings, in which:
FIG. 1 is a vertical cross-sectional isometric view of a prior art injection tip of a prior art direct-injection fuel injector;
FIG. 2 is a horizontal cross-sectional view of the prior art injection tip;
FIG. 3a is a schematic view of an injection valve positioned in the prior art injection tip;
FIG. 3b is a velocity vector plot of the fuel flow between a ball and a seat of the prior art injection tip;
FIG. 4 is a horizontal cross-sectional view of a first injection tip of a fuel injector, in accordance with a first embodiment of the invention;
FIG. 5a is a schematic view of an injection valve positioned in the first injection tip, in accordance with the first embodiment of the invention;

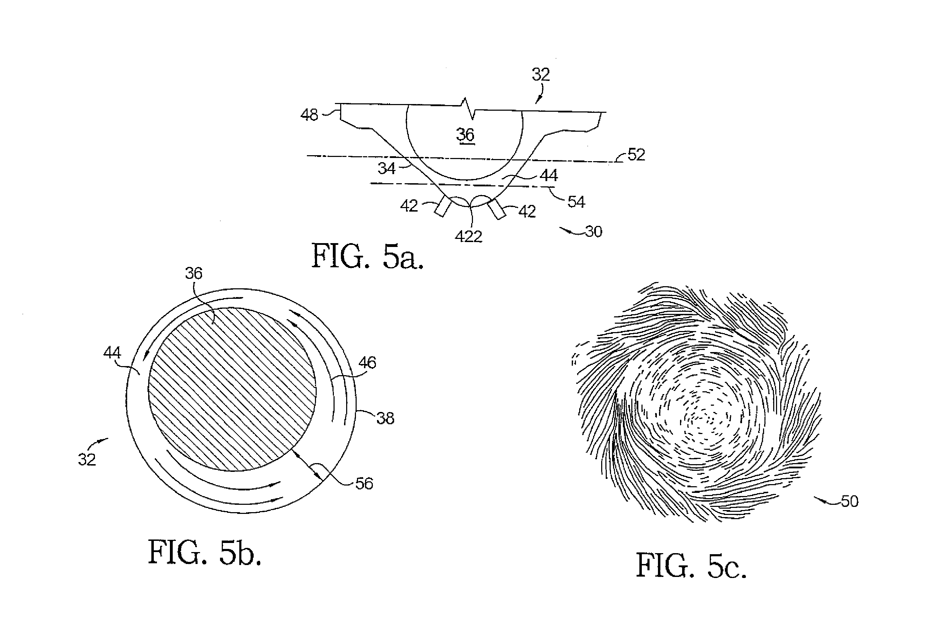

FIG. 5 b is a schematic horizontal cross-sectional of the injection valve positioned in the first injection tip view taken along a first sectional plane, in accordance with the first embodiment of the invention;
FIG. 5c is a velocity vector plot of the fuel flow between a ball and a seat of an injection valve positioned in the first injection tip taken along a second sectional plane, in accordance with the first embodiment of the invention;

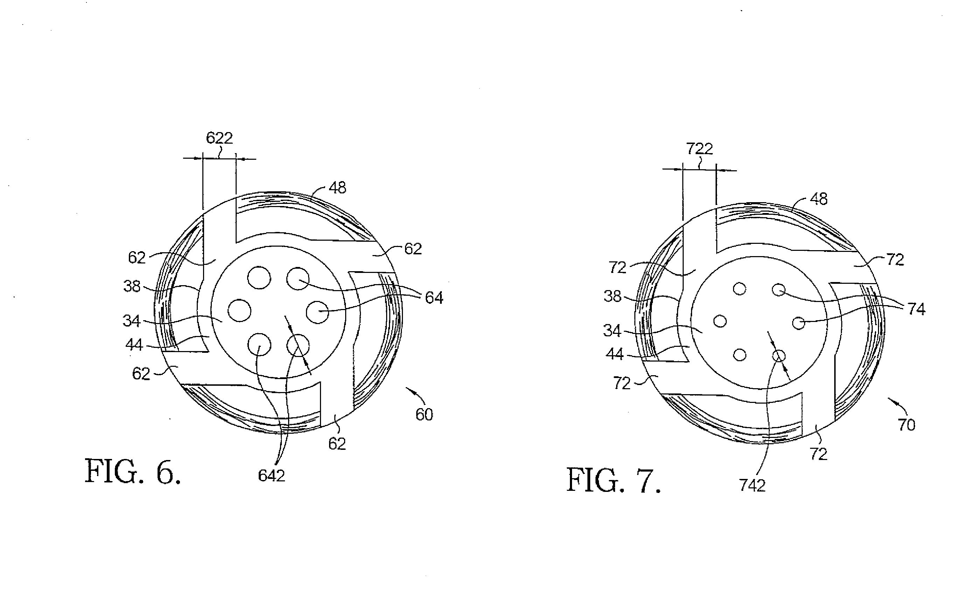

FIG. 6 is a horizontal cross-sectional view of a second injection tip of a fuel injector, in accordance with a second embodiment of the invention;
FIG. 7 is a horizontal cross-sectional view of a third injection tip of a fuel injector, in accordance with a third embodiment of the invention;

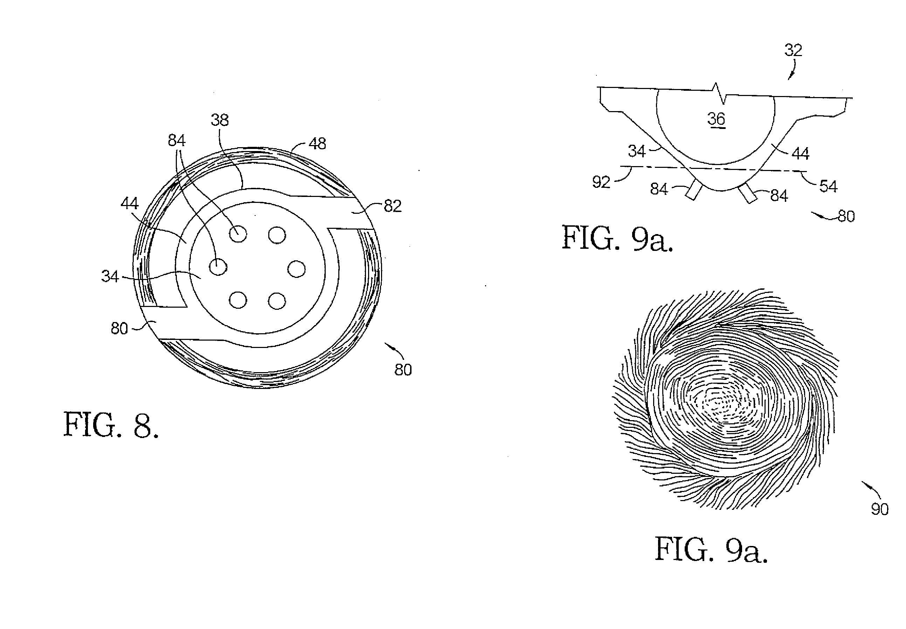

FIG. 8 is a horizontal cross-sectional view of a fourth injection tip of a fuel injector, in accordance with a fourth embodiment of the invention;
FIG. 9a is a schematic view of an injection valve positioned in the fourth injection tip in accordance with the fourth embodiment of the invention; and
FIG. 9b is a velocity vector plot of the fuel flow between a ball and a seat of an injection valve positioned in the fourth injection tip, in accordance with the fourth embodiment of the invention.

Corresponding reference characters indicate corresponding parts throughout the several views. The exemplification set out herein illustrates preferred embodiments of the invention, in one form, and such exemplification is not to be construed as limiting the scope of the invention in any manner.

### DESCRIPTION OF THE PREFERRED EMBODIMENTS

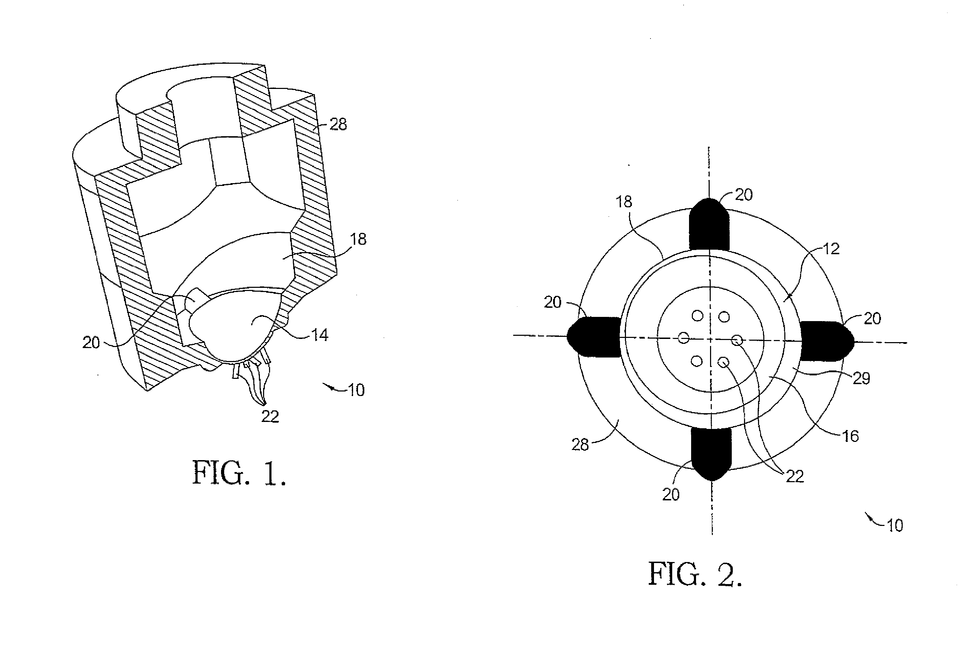

Referring to FIGS. 1 through 3, a prior art injection tip 10 of a prior art direct-injection fuel injector includes an injection valve 12 having a beveled circular valve seat 14 and a reciprocably-actuated valve ball 16, a guide bore 18, four perpendicular inflow holes 20, and a plurality of director holes 22. Valve seat 14 is adapted to be sealingly welded into a body 28 of injection tip 10. Valve ball 16 seals against seat 14 in a circular sealing line. Guide bore 18 guides the axial movement of ball 16. Controllably varying the position of valve ball 16 with respect to valve seat 14 varies the flow of fuel across valve seat 14. Inflow holes 20 are positioned perpendicular to the surface of ball 16 and feed fuel into a flow area 29 between ball 16 and seat 14. Director holes 22 are in fluid communication with the flow area 29 between ball 16 and seat 14 and are inclined at different angles to provide a required spray target.

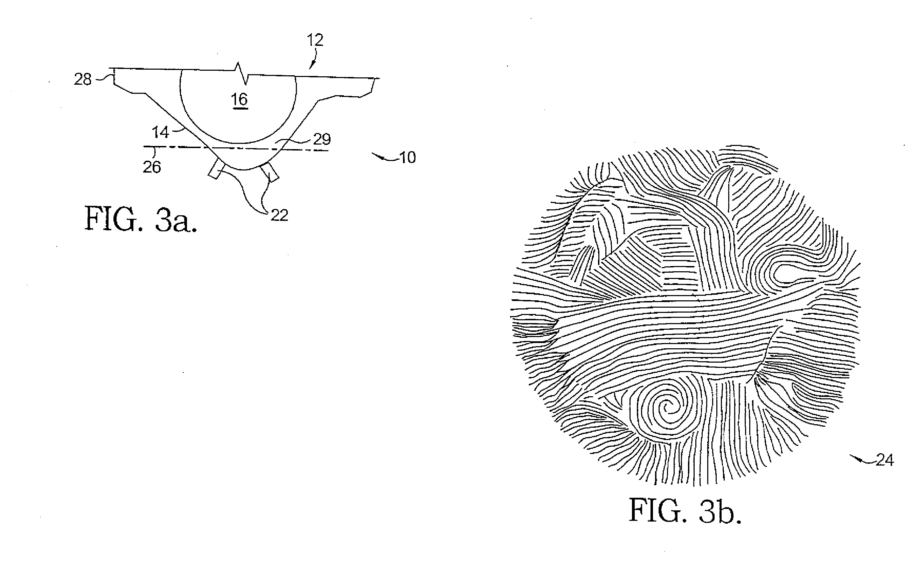

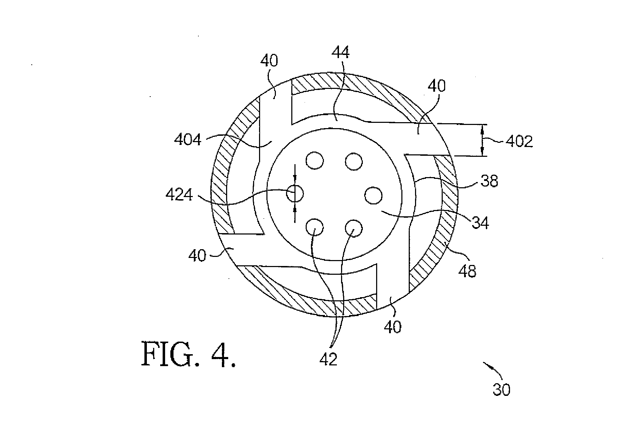

As illustrated in FIG. 2, the fuel jet emanating from inflow holes 20 impinges directly on the surface of ball 16, which may cause erosion on the surface of ball 16. The fuel jet emanating from inflow holes 20 also may move the ball from the center of guide bore 18. Accordingly, the flow area 29 around ball 16 may become asymmetric, which results in flow variations on the inlet side of director holes 22, as illustrated in the velocity vector plot 24 in FIG. 3b. Velocity vector plot 24 is taken along sectional plane 26 shown in FIG. 3a. Velocity vector plot 24 shows an asymmetric velocity profile at the inlet side of director holes 22 that is created by the offset of ball 16. Such flow variations may result in spray skewness, where director holes 22 away from flow holes 20 may starve. Referring to FIGS. 4 and 5, a first injection tip 30 of a direct-injection injector in accordance with a first embodiment of the invention includes four tangential inflow holes 40. Injector tip 30 further includes an injection valve 32 having a beveled circular valve seat 34 and a reciprocably-actuated valve ball 36, a guide bore 38, a plurality of director holes 42 having a diameter 424, and a body 48 as known in the prior art and as described above for prior art injection tip 10 (FIGS. 1-3).

Inflow holes 40 have a diameter 402 and inflow openings 404 and are positioned tangential to valve seat 34 and to the surface of ball 36. Diameter 402 may be, for example, about 0.55 mm. Inflow openings 404 tangentially face valve ball 36 and are positioned preferably at equal distance from each other. More or less than the four tangential inlet holes 40 shown in FIG. 4 may be used. An even number of tangential inflow holes 40 may be used. Tangential inflow holes 40 may be positioned evenly around a circumference of valve ball 36 providing fuel flow to parallel tangents of ball 36 as shown in FIG. 4.

Inflow holes 40 feed fuel into a flow area 44 between ball 36 and seat 34 when ball 36 is lifted from seat 34. The fuel stream coming through inflow holes 40 enters flow area 44 tangentially thereby causing a swirling motion 46 of the fuel in flow area 44 as shown in FIG. 5b, a cross-sectional view along a first sectional plane 52 shown in FIG. 5a. The swirling motion 46 reduces the impact of the asymmetric nature of flow area 44 due to an offset position of ball 36 in seat 34. As can be seen in FIG. 5c, a velocity vector plot 50 taken along a second sectional plane 54 (FIG. 5a), the swirling motion 46 of the fuel is sufficient for reducing the flow variations in flow area 44 at the inlet side 422 of director holes 42 compared to the prior art. Accordingly, tangential inflow holes 40 minimize the flow variations in flow area 44. This allows guide bore 38 to be designed having a relatively large clearance 56 relative to ball 36, which is desirable for applications in direct-injection fuel systems to prevent the ball 36 from getting stuck. A guide bore to ball clearance 56, which is the difference between the diameter of guide bore 38 and the diameter of valve ball 36, of up to about 8 µm may be acceptable without increasing the flow variations. The swirling motion 46 of the fuel caused by tangential inflow holes 40 may further reduce flow variations due to the relative position of director holes 42 with respect to inflow holes 40.

Velocity vector plot 50 shows a symmetric velocity profile of the fuel flow at the inlet side 422 of director holes 42. Even though ball 36 is offset, the velocity profile is symmetric and the flow variations are reduced utilizing tangential inflow holes 40 in accordance with the invention compared to prior art injection tip 10 having perpendicular inflow holes 20, as can be seen by comparing velocity vector plot 50 (FIG. 5c) in accordance with the invention with prior art velocity vector plot 24 (FIG. 3b).

Furthermore, since the fuel jet coming through inflow holes 40 is now acting tangentially on the surface of valve ball 36, the impact force is reduced to the prior art where the fuel jet is acting directly on the surface of a valve ball (FIGS. 1-3). A reduced impact force in accordance with the invention may lower the erosion process on the surface of ball 36 and at the ball 36 and seat 34 interface significantly compared to prior art injection tip 10 shown in FIG. 1.

While the utilization of tangential inflow holes 40 in first injection tip 30 may reduce the flow variations on the inlet side 422 of director holes 42, the mass flow rate through injection valve 32 may also decrease. The reduction of mass flow rate can be compensated, for example, by using director holes having a larger diameter than director holes 42 or by using tangential inflow holes that have a larger diameter than inflow holes 40. It might further be possible to increase the number of tangential inflow holes 40 or director holes 42 to increase the mass flow rate through valve 32 without increasing the flow variations on the inlet side 422 of director holes 42.

Referring to FIG. 6, a second injection tip 60 of a direct-injection injector in accordance with a second embodiment of the invention includes four inflow holes 62, each having a diameter 622, and a plurality of director holes 64, each having a diameter 642. The diameter 622 of inflow holes 62 may be the same as diameter 402 of inflow holes 40 shown in FIG. 4. The diameter 642 of the director holes 64 is larger than the diameter 424 of director holes 42 shown in FIG. 1. Diameter 642 may be, for example, about 175µm compared to about 165 µm of diameter 424. Increasing the size of director holes 64 (FIG. 6) compared to the size of inflow holes 42 (FIG. 4) increases the mass flow rate through injection valve 32 while maintaining the reduced flow variations between valve ball 36 and valve seat 34 on the inlet side of director holes 64.

Referring to FIG. 7, a third injection tip 70 in accordance with a third embodiment of the invention includes four inflow holes 72, each having a diameter 722, and a plurality of director holes 74, each having a diameter 742. The diameter 722 of inflow holes 72 is larger than the diameter 402 of inflow holes 40 shown in FIG. 4. The diameter 742 of the director holes 74 may be the same as the diameter 424 of director holes 42 shown in FIG. 1. Diameter 722 may be, for example, about 0.65 mm compared to about 0.55 mm of diameter 402.

Increasing the size of director holes 74 (FIG. 7) compared to the size of inflow holes 42 (FIG. 4) increases the mass flow rate through injection valve 32 while maintaining the reduced flow variations between valve ball 36 and valve seat 34 on the inlet side of director holes 64. The increase in mass flow rate may be less for an increased diameter 722 of inflow holes 72 (FIG. 7) than for an increased diameter 642 of director holes 64 (FIG.6).

While FIGS. 6 and 7 show a change in only one parameter, the size of director holes 64 or the size of inflow holes 72, respectively, it may be possible to increase both parameters, the size of director holes 64 or the size of inflow holes 72, at the same time to achieve a higher mass flow rate while maintaining low flow variations.

In accordance with a fourth embodiment of the invention, a fourth injection tip 80 illustrated in FIGS. 8 and 9 includes only two tangential inflow holes 82. Inflow holes 82 are positioned such that the fuel stream coming through inflow holes 82 enters flow area 44 tangentially at opposite tangents of valve ball 36. The inflowing fuel causes a swirling motion of the fuel similar to the swirling motion 46 in flow area 44 as shown in FIG. 5b.

A velocity vector plot 90 illustrated in FIG. 9b taken along a sectional plane 92 shown in FIG. 9a demonstrates that utilization of only two tangential inflow holes 82 also results in a symmetric velocity profile and that, thus, a reduction in flow variation compared to the prior art (FIG. 3b) can be achieved with only two tangential inflow holes 90. It is obvious from the velocity vector field shown in velocity vector plot 90 that design of the fourth injection tip 80 generates sufficient swirl to overcome the effect of ball valve 36 offset and rotation of director holes 42. To increase the mass flow rate through valve 32 in the fourth injection tip 80, the size of the injector holes can be increased as shown in Fig. 6 and/or the size of the two tangential inflow holes can be increased similar to inflow holes 74 shown in Fig. 7.

As compared to the prior art, injection tips 30, 60, 70, and 80 in accordance with preferred embodiments of the invention, beneficially provide tangential inflow holes that enable a fuel stream to enter the gap between ball 36 and seat 36 of injection valve 32 tangentially creating a swirling motion. The swirling motion reduces the flow variations on the inlet side 422 of director holes 42 compared to prior art. Furthermore, the impact force of the inflowing fuel stream on the surface of ball 36 is reduced compared to the prior art, since in accordance with the invention the fuel stream acts tangentially on the surface of ball 36.

While injection tips 30, 60, 70, and 80 have been described to include four or two tangential inflow holes, any number of tangential inflow holes may be used in accordance with a specific application.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. An injection tip of a fuel injector, comprising:
an injection valve assembly including a valve seat and a valve; and
tangential inflow holes feeding fuel into a flow area between said valve and said seat, said fuel entering said flow area tangentially thereby causing a swirling motion of said fuel in said flow area.

2. The injection tip of Claim 1, further including a plurality of director holes in fluid communication with said flow area, said swirling motion of said fuel reducing flow variation in said flow area at an inlet side of said director holes.

3. The injection tip of Claim 1, wherein said fuel fed into said flow area by said tangential flow holes acts tangentially on a surface of said valve.

4. The injection tip of Claim 1, wherein four tangential inflow holes having a first diameter are included.

5. The injection tip of Claim 4, wherein said four tangential inflow holes have a second diameter that is larger than said first diameter.

6. The injection tip of Claim 1, wherein two tangential inflow holes positioned at opposite tangents of said valve are included.

7. The injection tip of Claim 2, wherein said director holes have a first diameter.

8. The injection tip of Claim 7, wherein said director holes have a second diameter that is larger than said first diameter.

9. The injection tip of Claim 1, wherein said tangential inflow holes include inflow openings that tangentially face said valve and that are positioned at equal distance from each other.

10. A fuel injector for direct-injection, comprising:
an injection tip;
an injection valve assembly positioned within said injection tip;
at least two tangential inflow holes having a first diameter and feeding fuel to a flow area of said injection valve assembly; and
a plurality of director holes in fluid communication with said flow area, said director holes having a first diameter; wherein the flow of said fuel on an inlet side of said director holes has a symmetric velocity profile.

11. The fuel injector of claim 10, wherein said injection valve assembly includes a beveled circular valve seat that receives a reciprocably-actuated valve, wherein said flow area is positioned between said valve seat and said valve.

12. The fuel injector of claim 10, wherein said tangential inflow holes have a second diameter that is larger than said first diameter.

13. The fuel injector of claim 10, wherein said director holes have a second diameter that is lager than said first diameter.

14. The fuel injector of claim 10, wherein an even number of tangential inflow holes is included, and wherein said tangential inflow holes are positioned evenly around a circumference of said valve ball providing flow to parallel tangents of said valve ball.

15. A method for supplying fuel to a tip of a fuel injector for direct-injection, comprising the steps of:
positioning inflow holes tangentially to a surface of a valve of an injection valve assembly;
feeding fuel into said flow area between said valve and a valve seat of said injection valve assembly through said inflow holes; and
creating a swirling motion of said fuel in said flow area.
